# EUROPÄISCHE PATENTSCHRIFT

(11) **EP 0 467 077 B1**
(45) Veröffentlichungstag und Bekanntmachung des Hinweises auf die Patenterteilung: **25.08.1993**
(21) Anmeldenummer: 91109866.3
(22) Anmeldetag: 17.06.1991
(51) Int. Cl.: F16L 55/12

(54) **Aufblasbares Rohrdichtkissen**
Inflatable pipe sealing bag
Sac gonflable d'étanchéité pour pipes

(30) Priorität: 17.07.1990 DE 4022638
(43) Veröffentlichungstag der Anmeldung: 22.01.1992
(73) Patentinhaber: Haro, Jürgen, 37627 Stadtoldendorf (DE)
(72) Erfinder: Haro, Jürgen, 37627 Stadtoldendorf (DE)
(74) Vertreter: Lins, Edgar, Dipl.-Phys. Dr.jur.

(56) Entgegenhaltungen:
- GB-A- 2 204 378
- US-A- 3 762 446
- US-A- 4 203 473
- US-A- 4 268 041

## Beschreibung

Die Erfindung betrifft ein aufblasbares Rohrdichtkissen für Rohre unterschiedlichen Durchmessers mit einem im wesentlichen zylindrischen, flexiblen, aber unelastischen Wandabschnitt, der im aufgeblasenen Zustand des Rohrdichtkissens zur Anlage an der Rohrinnenwand unter Ausbildung von Falten bestimmt ist.

Ein derartiges Rohrdichtkissen ist durch die DE-A-38 10 515 bekannt. Es besteht aus einem im wesentlichen zylindrischen, aus einer flexiblen, aber im wesentlichen unelastischen Kunststofffolie gebildeten Sack, der gegenüber der abzudichtenden Öffnung ein Übermaß aufweist und sich beim Aufblasen unter Faltenbildung dicht an die Ränder und Wandungen der Öffnung anlegt. Trotz der Faltenbildung soll es zu einer praktisch vollständigen Abdichtung kommen. Die Praxis hat gezeigt, daß eine tatsächliche vollständige Abdichtung aufgrund der Faltenbildung in den für Rohrabdichtungen erforderlichen Wandmaterialien und -stärken nicht möglich ist.

Durch das DE-U-82 19 550 ist eine Weiterbildung eines derartigen Rohrdichtkissens bekannt. Es ist so ausgebildet, daß es in dem im wesentlichen zylindrischen Wandabschnitt ein Übermaß gegenüber den abzusperrenden Rohrdurchmessern aufweist, so daß es für eine große Durchmesserbreite von Rohren verwendbar ist. Da der Falten bildende zylindrische Wandabschnitt dieses Rohrdichtkissens wegen der Falten nicht zur Abdichtung geeignet ist, sind zur Abdichtung konische Endstücke vorgesehen. Dabei gibt der kleinste Durchmesser des konischen Endstückes die absolut untere Grenze für den Rohrdurchmesser an. Die Idee dieses Kissens besteht darin, daß im konischen Bereich für unterschiedliche Rohrdurchmesser immer ein ringförmiger Bereich zur Verfügung steht, der gerade ohne Faltenbildung unter Druck an der Rohrinnenwand anliegt. Diese bekannten Rohrdichtkissen haben den Vorteil, daß sie sehr widerstandsfähig ausgebildet sein können, da die Wände des Kissens aus einem gummierten Aramidfasergewebe bestehen können, weil die Wände nicht dehnbar sein müssen. Beim Ablassen des Druckes des Rohrdichtkissens wird der vorteilhafte Effekt erzielt, daß das Rohrdichtkissen erst an seiner Unterseite, wo der statische Wasserdruck am höchsten ist, kontrolliert Wasser durchläßt, trotzdem noch im Rohrquerschnitt eingeklemmt bleibt.

Dieses Rohrdichtkissen ist gegenüber früher verwendeten, auf dem Luftballon-Prinzip beruhenden Rohrdichtkissen, stark vorteilhaft. Rohrdichtkissen mit dehnbaren Wänden lassen sich zwar für unterschiedliche Rohrdurchmesser abdichtend einsetzen, haben jedoch den Nachteil, daß die dehnbaren Wände nicht so widerstandsfähig ausgebildet sein können und daß darüber hinaus beim Ablassen des Druckes des Rohrdichtkissens dieses allseitig seinen Durchmesser verringert und somit sofort aus dem Rohr hinausgespült wird. Ein kontrolliertes Freigeben der Strömung in dem Rohr ist daher nicht möglich.

Ein elastisch aufblasbares Rohrdichtkissen für Rohrleitungen ist durch DE-A-35 33 901 bekannt und dient zum Verschließen von Gastransportleitungen. Der aufblasbare elastische Körper ist dabei mit einer Textilschutzhülle umgeben, die mit dem aufblasbaren elastischen Körper fest verklebt ist. Aufgrund der Textilstruktur läßt sich eine Gasdichtigkeit in der Rohrleitung nicht mit der erforderlichen Sicherheit erzielen. Daher ist dieser elastische Körper im mittleren Bereich mit einem elastischen Ring versehen, der mit der Textilschutzhülle verklebt ist und in die Zwischenräume zwischen den Textilfäden eindringt. Mit diesem elastischen Ring sollen die Nachteile der aufgrund der Textilstruktur entstehenden Undichtigkeiten beseitigt werden.

Aus den genannten Gründen sind derartige elastische Rohrdichtkissen nachteilig gegenüber beispielsweise den aus DE-U-82 19 550 bekannten Rohrdichtkissen, bei denen allerdings in ungünstigen Fällen Undichtigkeiten aufgetreten sind.

Ein erfindungsgemäßes aufblasbares Rohrdichtkissen der eingangs erwähnten Art ist dadurch gekennzeichnet, daß der zylindrische Wandabschnitt wenigstens einen geschlossenen, umlaufenden Dichtungsstreifen aus elastischem Material in einer solchen Stärke aufweist, daß der Dichtungsstreifen im aufgeblasenen Zustand eine Abdichtung zwischen dem zylindrischen Wandabschnitt und der Rohrinnenwand auch im Bereich der Falten bewirkt.

Das erfindungsgemäße Rohrdichtkissen macht von den Vorteilen eines Rohrdichtkissens mit unelastischen Wänden Gebrauch, erlaubt jedoch durch den aufgebrachten Dichtungsstreifen eine Abdichtung des im wesentlichen zylindrischen Wandabschnitts im Bereich der Falten, was aufgrund des zwar flexiblen, jedoch relativ steifen und unelastischen Wandmaterials nicht möglich war. Der elastische Dichtungsstreifen kompensiert die durch die Faltenbildung des Wandmaterials an sich entstehenden Durchtrittsspalten durch eine ungleichmäßige Verformung, so daß die Durchtrittsspalten durch das elastische Material vollständig ausgefüllt werden, wodurch die vollständige Abdichtung erreichbar ist.

Für Rohrdichtkissen, die aus gummiertem Aramidfasergewebe als bevorzugtes Wandmaterial gebildet sind, ist eine Stärke des Dichtungsstreifens von wenigstens fünf Millimetern, vorzugsweise von zehn bis fünfzehn Millimetern vorteilhaft, um eine zuverlässige Dichtung zu erreichen. Die Breite des Dichtstreifens sollte drei Zentimeter nicht unterschreiben, vorzugsweise fünf bis zehn Zentimeter betragen.

Als Material für den Dichtstreifen kommen alle widerstandsfähigen, geschlossenzelligen Materialien, wie beispielsweise Moosgummi in Frage. Ein bevorzugtes Material ist jedoch geschlossenzelliger Zellkautschuk.

Der Dichtungsstreifen wird vorzugsweise auf die Außenseite des im wesentlichen zylindrischen Wandteils aufgeklebt. Andere dichte Verbindungsarten, beispielsweise Aufschweißen oder Aufvulkanisieren, sind ebenfalls möglich.

Selbstverständlich ist es möglich, eine noch sicherere Dichtwirkung bei dem erfindungsgemäßen Rohrdichtkissen dadurch zu erreichen, daß sich an dem im wesentlichen zylindrischen Wandabschnitt wenigstens ein konischer Endabschnitt anschließt, so daß die erfindungsgemäße Abdichtung im im wesentlichen zylindrischen Wandteil durch eine bekannte Ringdichtwirkung im konischen Endstück ergänzt wird. Zur Ableitung der Spannungen bei der Faltenbildung ist es vorteilhaft, wenn sich an beiden Enden des im wesentlichen zylindrischen Wandabschnitts ein konischer Endabschnitt anschließt.

Die Erfindung soll im folgenden anhand von in der Zeichnung dargestellten Ausführungsbeispielen näher erläutert werden. Es zeigen:
- Figur 1:: Ein Rohrdichtkissen, das in einem im wesentlichen zylindrischen Wandabschnitt zwei umlaufende Dichtstreifen aufweist.
- Figur 2:: Die Ausbildung einer Falte des Rohrdichtkissens im Bereich eines Dichtungsstreifens im nicht aufgeblasenen Zustand.
- Figur 3:: Ein mit dem Dichtungsstreifen beklebtes und in einer Falte ausgebildetes Wandstück, das unter dem Aufblasdruck gegen eine Rohrwandung gedrückt wird.

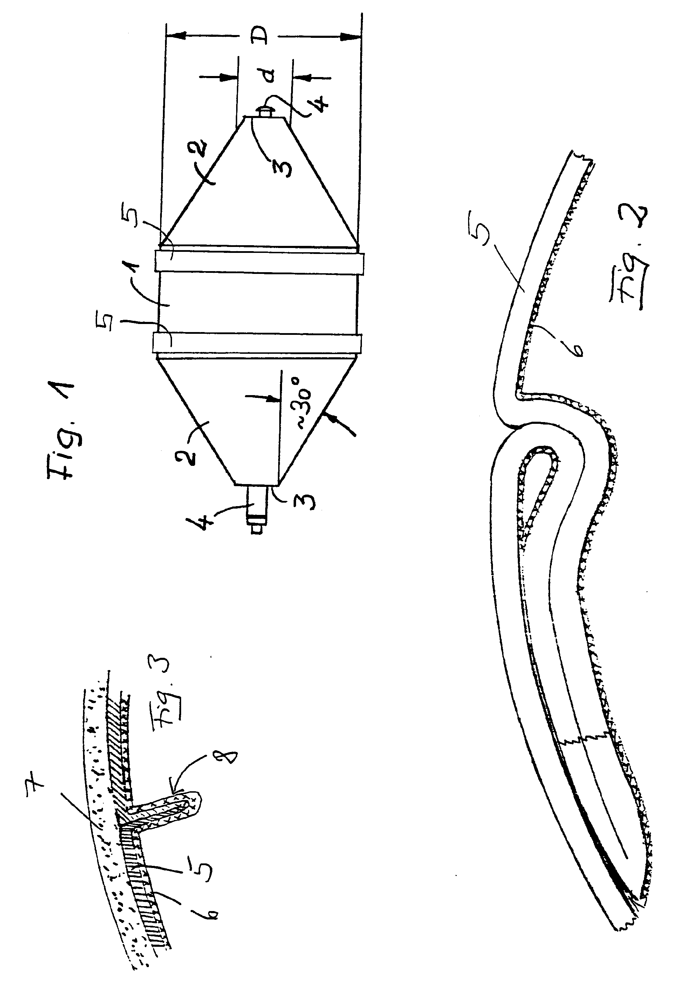

Das in Figur 1 dargestellte Rohrdichtkissen besteht aus einem beschichteten, luftdichten Gewebe, dessen Fasern biegsam und zugfest sind. Ein bevorzugtes Fasermaterial sind Aramidfasern. Das Rohrdichtkissen hat ein im wesentlichen zylindrisches Wandteil 1, an das sich zwei konische Endteile 2 anschließen. Die konischen Endteile 2 sind mit jeweils einer achsnormal verlaufenden Stirnfläche 3 versehen, die zum Einsetzen und Befestigen von Armaturen 4 dient. Der kleinste nutzbare Durchmesser d des konischen Endstücks 2 stellt die untere Grenze für einen Rohrdurchmesser dar, für den das dargestellte Rohrdichtkissen noch einsetzbar ist. Der größtmögliche Rohrdurchmesser für den Einsatz des dargestellten Rohrdichtkissens liegt unterhalb des Außendurchmessers D des im wesentlichen zylindrischen Wandabschnitts 1, so daß das Rohrdichtkissen im Betrieb unter Faltenbildung an der Innenwand des Rohres anliegt.

In dem in Figur 1 dargestellten Ausführungsbeispiel ist das Rohrdichtkissen in dem im wesentlichen zylindrischen Wandabschnitt 1 mit zwei ringförmig um die gesamte Mantelfläche umlaufenden, geschlossenen Dichtungsstreifen 5 beklebt, die eine Breite von fünf bis zehn Zentimeter und eine Stärke von zehn bis fünfzehn Millimeter aufweisen und vorzugsweise aus geschlossenzelligem Zellkautschuk bestehen.

Im nicht aufgeblasenen Zustand bildet das Rohrdichtkissen einen faltigen Sack, von dem eine Falte im Bereich der Dichtungsstreifen 5 beispielhaft in Figur 2 dargestellt ist. Diese Darstellung läßt den Dichtungsstreifen 5 mit einer vergleichsweise großen Stärke im Vergleich zur Stärke der aus einem gummierten Aramidfasergewebe gebildeten Wandung 6 des Rohrdichtkissens erkennen.

Figur 3 zeigt einen Abschnitt der Wandung 6 mit dem aufgeklebten Dichtungssteifen 5, der unter dem Aufblasdruck des Rohrdichtkissens gegen die Innenwand einer Rohrwand 7 gepresst wird. Figur 3 läßt schematisch erkennen, daß der elastische Dichtungsstreifen 5 komprimiert wird, so daß er den Abstand zwischen Wandungsstücken 6 im Bereich einer Falte 8 vollständig ausfüllt und darüber hinaus einen spaltfreien Abschluß zur Rohrinnenwand 7 herstellt. Der Dichtungsstreifen 5 erlaubt somit die Abdichtung der relativ steifen Wandung 6 des Rohrdichtkissens gegenüber der Rohrwand 7.

Es ist ohne weiteres ersichtlich, daß für die erforderliche Abdichtung eine gewisse Mindeststärke des Dichtungsstreifens 5 erforderlich ist, um aufgrund seiner ungleichmäßigen Kompression die durch die relativ steife Wandung 6 entstehenden Durchtrittsspalten zwischen Wandung 6 und Rohrwand 7 vollständig ausfüllen zu können.

Bei dem erfindungsgemäßen Rohrdichtkissen wird somit der bisher nicht für eine Abdichtung für brauchbar gehaltene, im wesentlichen zylindrische und während seines Einsatzes Falten bildende Wandabschnitt 1 zur Abdichtung ausgenutzt.

## Patentansprüche

1. Aufblasbares Rohrdichtkissen für Rohre unterschiedlichen Durchmessers mit einem im wesentlichen zylindrischen, flexiblen aber unelastischen Wandabschnitt, der im aufgeblasenen Zustand des Rohrdichtkissens zur Anlage an der Rohrinnenwand (7) unter Ausbildung von Falten (8) bestimmt ist, **dadurch gekennzeichnet,** daß der zylindrische Wandabschnitt (1) wenigstens einen geschlossenen, umlaufenden Dichtungsstreifen (5) aus elastischem Material in einer solchen Stärke aufweist, daß der Dichtungsstreifen im aufgeblasenen Zustand eine Abdichtung zwischen dem zylindrischen Wandabschnitt (1) und der Rohrinnenwand (7) auch im Bereich der Falten (8) bewirkt.

2. Rohrdichtkissen nach Anspruch 1, gekennzeichnet durch eine Stärke des Dichtungsstreifens (5) von wenigstens fünf Millimetern.

3. Rohrdichtkissen nach Anspruch 2, gekennzeichnet durch eine Stärke des Dichtungsstreifens (5) von zehn bis fünfzehn Millimetern.

4. Rohrdichtkissen nach einem der Ansprüche 1 bis 3, gekennzeichnet durch eine Breite des Dichtungsstreifens (5) von wenigstens drei Zentimetern.

5. Rohrdichtkissen nach Anspruch 4, gekennzeichnet durch eine Breite des Dichtungsstreifens (5) von fünf bis zehn Zentimetern.

6. Rohrdichtkissen nach einem der Ansprüche 1 bis 5, dadurch gekennzeichnet, daß der Dichtungsstreifen (5) aus einem geschlossenzelligen Zellkautschuk besteht.

7. Rohrdichtkissen nach einem der Ansprüche 1 bis 6, dadurch gekennzeichnet, daß der Dichtungsstreifen (5) auf die Außenseite des im wesentlichen zylindrischen Wandteils (1) aufgeklebt ist.

8. Rohrdichtkissen nach einem der Ansprüche 1 bis 7, dadurch gekennzeichnet, daß wenigstens zwei Dichtungsstreifen (5) auf das im wesentlichen zylindrische Wandteil (1) aufgebracht sind.

9. Rohrdichtkissen nach einem der Ansprüche 1 bis 8, dadurch gekennzeichnet, daß sich an dem im wesentlichen zylindrischen Wandabschnitt (1) wenigstens ein konischer Endabschnitt (2) anschließt.

10. Rohrdichtkissen nach einem der Ansprüche 1 bis 9, dadurch gekennzeichnet, daß die Wandung (6) des Rohrdichtkissens aus einem beschichteten, aus zugfesten Fasern hergestellten Gewebe bestehen.

11. Rohrdichtkissen nach Anspruch 10, dadurch gekennzeichnet, daß das Gewebe aus Aramidfasern besteht.

## Claims

1. Inflatable pipe sealing bag for pipes of different diameter, having a substantially cylindrical, flexible but non-elastic wall section which, in the inflated state of the pipe sealing bag, is intended to bear against the pipe inner wall (7) while forming folds (8), characterized in that the cylindrical wall section (1) has at least one closed, peripheral sealing strip (5) of elastic material of a thickness such that the sealing strip in the inflated state effects sealing between the cylindrical wall section (1) and the pipe inner wall (7) also in the region of the folds (8).

2. Pipe sealing bag according to Claim 1, characterized by a thickness of the sealing strip (5) of at least five millimetres.

3. Pipe sealing bag according to Claim 2, characterized by a thickness of the sealing strip (5) of ten to fifteen millimetres.

4. Pipe sealing bag according to one of Claims 1 to 3, characterized by a width of the sealing strip (5) of at least three centimetres.

5. Pipe sealing bag according to Claim 4, characterized by a width of the sealing strip (5) of five to ten centimetres.

6. Pipe sealing bag according to one of Claims 1 to 5, characterized in that the sealing strip (5) comprises a cellular caoutchouc having closed cells.

7. Pipe sealing bag according to one of Claims 1 to 6, characterized in that the sealing strip (5) is adhered to the outside of the substantially cylindrical wall part (1).

8. Pipe sealing bag according to one of Claims 1 to 7, characterized in that at least two sealing strips (5) are applied to the substantially cylindrical wall part (1).

9. Pipe sealing bag according to one of Claims 1 to 8, characterized in that at least one conical end section (2) adjoins the substantially cylindrical wall section (1).

10. Pipe sealing bag according to one of Claims 1 to 9, characterized in that the wall (6) of the pipe sealing bag comprises a coated textile produced from fibres with tensile strength.

11. Pipe sealing bag according to Claim 10, characterized in that the textile comprises aramid fibres.

## Revendications

1. Sac d'étanchéité gonflable pour tuyaux de différents diamètres, comprenant une partie de paroi sensiblement cylindrique, flexible mais inélastique, destinée, lorsque le sac d'étanchéité est à l'état gonflé, à s'appuyer contre la paroi intérieure (7) du tuyaux en formant des plis (8), caractérisé en ce que la partie de paroi cylindrique (1) présente au moins une bande d'étanchéité périphérique fermée (5), faite de matière élastique et ayant une épaisseur telle que, à l'état gonflé, la bande d'étanchéité assure une étanchéité entre la partie de paroi cylindrique (1) et la paroi intérieure (7) du tuyau, même dans la zone des plis (8).

2. Sac d'étanchéité pour tuyaux selon la revendication 1, caractérisé en ce que la bande d'étanchéité (5) a une épaisseur d'au moins 5 mm.

3. Sac d'étanchéité pour tuyaux selon la revendication 2, caractérisé en ce que la bande d'étanchéité (5) a une épaisseur de 10 à 15 mm.

4. Sac d'étanchéité pour tuyaux selon l'une des revendications 1 à 3, caractérisé en ce que la bande d'étanchéité (5) a une largeur d'au moins 3cm.

5. Sac d'étanchéité pour tuyaux selon la revendication 4, caractérisé en ce que la bande d'étanchéité (5) a une largeur de 5 à 10 cm.

6. Sac d'étanchéité pour tuyaux selon l'une des revendications 1 à 5, caractérisé en ce que la bande d'étanchéité (5) est constituée de caoutchouc cellulaire à cellules fermées.

7. Sac d'étanchéité pour tuyaux selon l'une des revendications 1 à 6, caractérisé en ce que la bande d'étanchéité (5) est collée sur le côté extérieur de la partie de paroi sensiblement cylindrique (1).

8. Sac d'étanchéité pour tuyaux selon l'une des revendications 1 à 7, caractérisé en ce qu'au moins deux bandes d'étanchéité (5) sont rapportées sur la partie de paroi sensiblement cylindrique (1).

9. Sac d'étanchéité pour tuyaux selon l'une des revendications 1 à 8, caractérisé en ce qu'au moins une partie terminale conique (2) se raccorde à la partie de paroi sensiblement cylindrique (1).

10. Sac d'étanchéité pour tuyaux selon l'une des revendications 1 à 9, caractérisé en ce que la paroi (6) du sac d'étanchéité pour tuyaux est constituée d'un tissu enduit fabriqué à partir de fibres inextensibles.

11. Sac d'étanchéité pour tuyaux selon la revendication 10, caractérisé en ce que le tissu est constitué de fibres aramide.
